# FASCICULE DE BREVET EUROPEEN

(11) **EP 2 429 357 B1**
(45) Date de publication et mention de la délivrance du brevet: **21.08.2013**
(21) Numéro de dépôt: 10721403.3
(22) Date de dépôt: 06.05.2010
(51) Int. Cl.: A47J 31/54

(54) **CHAUDIÈRE POUR MACHINE DE PRÉPARATION DE BOISSONS**
HEISSWASSERBEREITER FÜR EINEN GETRÄNKEZUBEREITUNGSAUTOMAT
BOILER FOR A DRINK PREPARATION MACHINE

(30) Priorité: 06.05.2009 FR 0953002
(43) Date de publication de la demande: 21.03.2012
(73) Titulaire: Compagnie Méditerranéenne des Cafés, 06510 Carros (FR)
(72) Inventeur: BLANC, Jean-Pierre, 06000 Nice (FR); GOERING, Alain, 06000 Nice (FR)
(74) Mandataire: Hautier, Nicolas
(86) Numéro de dépôt international: PCT/EP2010/056203
(87) Numéro de publication internationale: WO 2010/128114

(56) Documents cités:
- DE-A1- 10 317 353
- FR-A- 2 920 654
- GB-A- 2 452 981

## Description

La présente invention concerne une chaudière pour machine de préparation de boissons chaudes. Elle trouvera notamment son application pour les chaudières de machines à café.

De manière connue des chaudières pour machine de préparation de boissons chaudes comportent un corps et un support destiné à coopérer avec le corps pour définir une chambre de chauffage à l'intérieur de laquelle le fluide est chauffé.

Dans de nombreuses machines le corps et fixé sur le support de manière non amovible. Le démontage des chaudières est alors rendu très difficile voire impossible. Ces chaudières ne peuvent être réparées ou recyclées en fin de vie. Elles ne répondent pas aux exigences d'éco conception qui imposent le démantèlement et le recyclage de la chaudière.

D'autres machines présentent des conceptions qui permettent le démontage du corps par rapport au support. Ces machines font intervenir un nombre important d'organes de fixation amovibles tels des vis et des écrous. La mise en place de ces organes, tant lors de l'assemblage de la chaudière que lors du démontage, induisent un nombre d'étapes et un temps nécessaire à la fabrication et au démantèlement de la chaudière relativement élevés. Les coûts de fabrication et de recyclage sont par conséquent relativement importants.

Le document GB2452981 décrit une chaudière comportant un élément clippable sur un support pour maintenir la cohésion d'un empilement d'éléments formant une chambre de chauffage et comportant un diffuseur.

Ainsi, il existe un besoin consistant à proposer une chaudière pour machine de préparation de boissons chaudes qui présente un montage et un démontage simplifiés.

La présente invention vise à satisfaire ce besoin.

A cet effet, l'invention prévoit une chaudière pour machine de préparation de boissons comprenant un corps, un support, un diffuseur associé à un élément chauffant et porté par l'un parmi le support et le corps, le diffuseur définissant avec l'autre parmi le support et le corps une chambre de chauffage, le support et le corps présentant des portions complémentaires conformées pour coopérer et comprenant au moins une embase agencée pour coopérer avec le support et pour être fixée sur le corps de sorte à assurer la solidarisation amovible du corps sur le support.

Ainsi, la mise et le maintien en position des différents organes sont assurés directement par la coopération du support avec le corps et par la fixation de l'embase sur le support. La chaudière présente par conséquent un nombre de pièces limité. Son montage et son démontage sont facilités.

En outre les chaudières selon l'invention présentent une bonne tenue aux efforts générés par un fluide porté sous pression élevée à l'intérieur de la chambre de chauffage. Or, dans les chaudières démontables conventionnelles cette tenue à la pression n'est obtenue qu'au prix d'une démultiplication du nombre de vis et d'écrous, augmentant d'autant la complexité de l'assemblage et du désassemblage. L'invention s'avère ainsi particulièrement avantageuse pour les chaudières nécessitant une mise sous pression du fluide.

La chaudière selon l'invention pourra en outre présenter, de manière facultative au moins l'une quelconque des caractéristiques suivantes :
- le support est thermiquement isolant. Avantageusement, il présente une conductivité thermique inférieure à 1 W·m⁻¹·K⁻¹, et de préférence inférieure à 0.4 W·m⁻¹·K⁻¹. De préférence il est en plastique. Avantageusement, il est réalisé en : Polypropylène renforcé par fibre de verre, Polysulfone renforcé par fibre de verre, fibre de kevlar ou de carbone, en polyamide renforcé par fibre de verre, fibre de kevlar ou de carbone, Polyphtalamide renforcé par fibre de verre, fibre de kevlar ou de carbone ou tout autre plastique technique agréé au contact alimentaire.
- le corps est thermiquement isolant. Avantageusement, il présente une conductivité thermique inférieure à 1 W·m⁻¹·K⁻¹, et de préférence inférieure à 04 W·m⁻¹·K⁻¹. De préférence il est en plastique. Avantageusement, il est réalisé en : Polypropylène renforcé par fibre de verre, Polysulfone renforcé par fibre de verre, fibre de kevlar ou de carbone, en polyamide renforcé par fibre de verre, fibre de kevlar ou de carbone, Polyphtalamide renforcé par fibre de verre, fibre de kevlar ou de carbone ou tout autre plastique technique agréé au contact alimentaire.

- le diffuseur est thermiquement conducteur. Avantageusement, il présente une conductivité thermique supérieure à 1 W·m⁻¹·K⁻¹, et de préférence supérieure à 10 W·m⁻¹·K⁻¹. De préférence il est en métal. Avantageusement, il est réalisé en : acier inoxydable ferritique, acier inoxydable austénitique, acier au carbone revêtu d'émail ou d'un revêtement agréé au contact alimentaire, en aluminium alimentaire, ou tout autre métal agréé au contact alimentaire.
- l'un parmi le support et le corps comporte un diffuseur associé à un élément chauffant, le diffuseur définissant avec l'autre parmi le support et le corps la chambre de chauffage.
- l'élément chauffant est un film résistif tel qu'une résistance sérigraphiée ou photogravée.
- le support et le corps présentent des portions complémentaires conformées pour coopérer de sorte à imbriquer le support avec le corps.
- le support et le corps présentent des portions complémentaires conformées pour coopérer de sorte à supprimer au moins quatre degrés de liberté entre le support et le corps.
- l'embase s'insère sur le corps et sur le support.
- l'embase coopère avec le corps et le support. A cet effet, le support comprend au moins une face d'appui destinée à entrer au contact de l'embase. Le corps comprend au moins une face d'appui correspondante destinée à entrer au contact de l'embase.
- les portions complémentaires comprennent une portion saillante et une ouverture complémentaire de la portion saillante.
- le diffuseur présente une première paroi destinée à coopérer avec une face externe du corps ou du support pour définir la chambre de chauffage. Il présente une deuxième paroi, opposée à la première et sur laquelle est disposé un élément chauffant.
- la chaudière comprend une clef destinée à être insérée dans le support et l'embase pour assurer la solidarisation amovible de cette dernière sur le support.
- la chaudière comporte un scellé associé à la clef et conformé pour être supprimé en cas de retrait de la clef.
- la chaudière est agencée de sorte que l'effort généré par la pression soit transmis au diffuseur et au corps sans solliciter la clef.
- la chambre de chauffage est sensiblement contenue dans un plan.
- le corps comprend deux flasques disposés de part et d'autre du support.
- chacun des flasques définit une chambre de chauffage.
- chacun des flasques est associé à un diffuseur.
- la chambre de chauffage présente sensiblement une forme de cylindre ou de portion de cylindre.

L'invention a également pour objet une machine comprenant une chaudière selon l'une quelconque des caractéristiques précédentes.

En outre on prévoit selon l'invention un procédé dans lequel :
- on opère au moins une translation relative entre le corps et le support pour les faire coopérer, on fixe l'embase sur le corps et on solidarise l'embase sur le support.
- on insère une clef dans le support et l'embase pour assurer la solidarisation amovible de cette dernière sur le support et on scelle la clef.
- de manière préalable à la coopération du corps sur le support, on dispose sur le support un diffuseur associé à un élément chauffant, on insère au moins une dent d'un peigne au travers d'au moins une ouverture portée par le support de sorte à assurer le maintien du diffuseur sur le support.
- on retourne le support, on dispose sur le support un deuxième diffuseur associé à un élément chauffant, on insère au moins une dent d'un deuxième peigne au travers d'au moins une deuxième ouverture portée par le support de sorte à assurer le maintien du deuxième diffuseur sur le support.
- lorsqu'on dispose le diffuseur sur le support on connecte électriquement l'élément chauffant avec au moins un organe d'alimentation électrique porté par le support et on effectue un test électrique sur l'ensemble formé par le support et le diffuseur.
- préalablement au test, on dispose une pince enserrant l'ensemble de sorte à plaquer chacun des flasques sur le support.
- le corps chasse le peigne hors du support lors de la translation relative du corps par rapport au support.
- le flasque présente au moins une portion saillante complémentaire de l'ouverture et on déplace le flasque par rapport au support de sorte que la portion saillante pousse la dent du peigne et se loge dans l'ouverture du support.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 représente deux vues en perspective d'un support de chaudière selon un exemple de réalisation de l'invention.
Les figures 2 à 26 représentent différentes étapes de montage d'une chaudière selon un exemple de réalisation de l'invention.
Les figures 27 et 28 représentent deux vues en perspective d'une chaudière assemblée selon l'exemple de réalisation illustré aux figures précédentes.
La figure 29 est une vue en coupe de la chaudière illustrée aux figures 27 et 28

La chaudière comporte un support 100 destiné à coopérer avec un corps 200 pour définir une chambre de chauffage à l'intérieur de laquelle un fluide est chauffé.

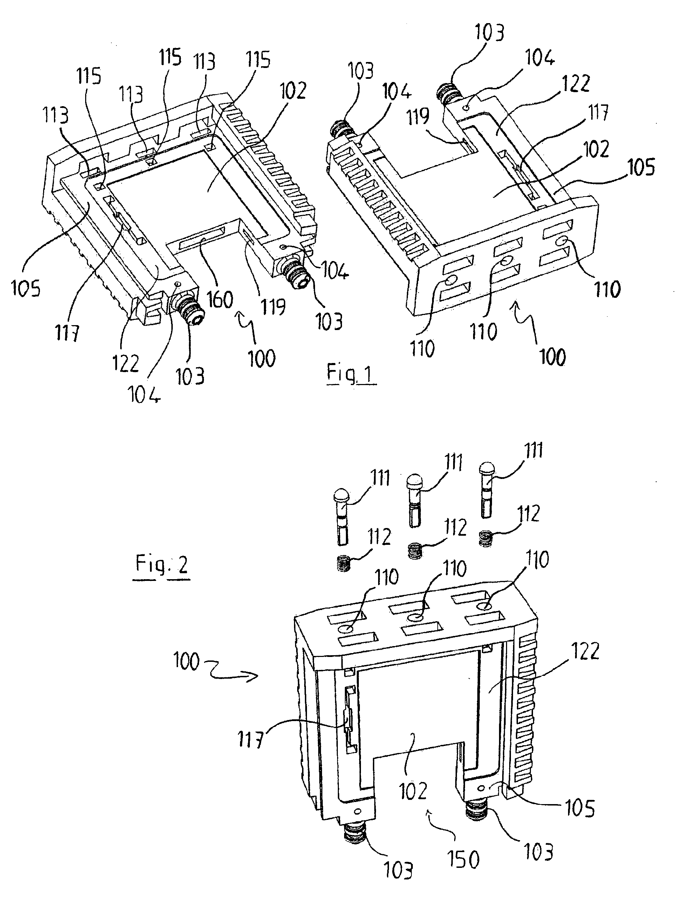

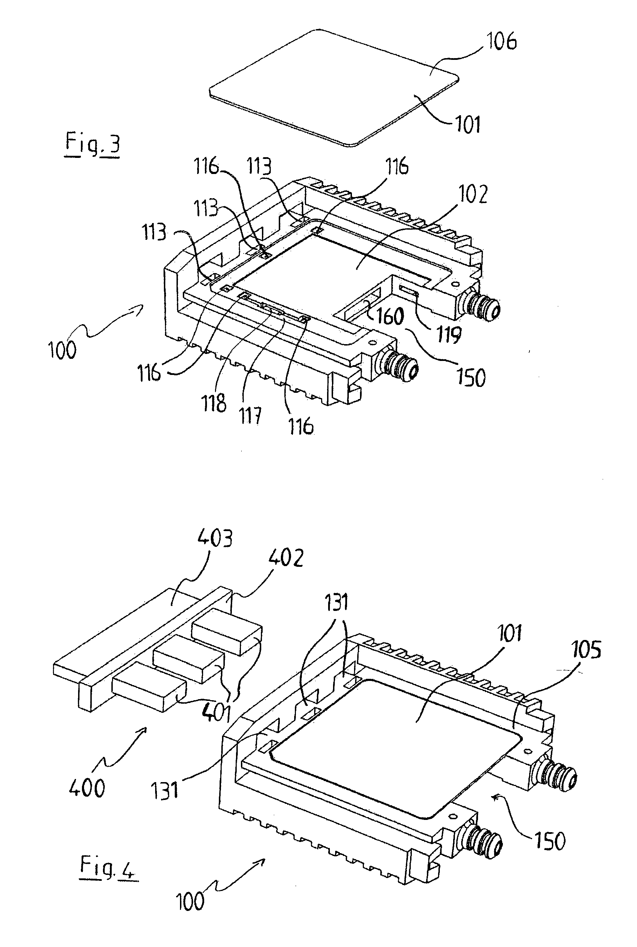

Un exemple particulier de support 100 est illustré en figure 1. Ce support 100 comporte un diffuseur 101 et au moins un évidement formant un emplacement d'accueil 102 à l'intérieur duquel est destiné à se loger un diffuseur 101. (Voir figures 3 et 4 notamment). Le diffuseur 101 est sensiblement plat. L' emplacement d'accueil 102 et le diffuseur 101 sont conformés pour que leur coopération assure une mise et un maintien en position corrects entre ce dernier et le support 100. Ainsi, lors du fonctionnement le diffuseur 101 est maintenu dans ce logement. Le diffuseur 101 présente une première paroi 106 destinée à coopérer avec une face externe 203 du corps 200 pour définir la chambre de chauffage. Il présente une deuxième paroi, opposée à la première et sur laquelle est disposé un élément chauffant.

Avantageusement, cet élément chauffant est un film résistif présentant une haute densité de puissance. Il est par exemple obtenu par sérigraphie ou photogravure à partir d'une encre résistive. Il peut être de type film épais, habituellement désigné par l'expression "Thick Film" ou encore être de type circuit imprimé. Cet élément chauffant convient pour les chaudières de type FTH (Flow Through Heater) qui présentent pour particularité que leur élément chauffant transmet de la chaleur presque directement au fluide et au fur et à mesure que celui se déplace dans un canal de circulation. Pour des raisons de clarté, on ne fera référence dans la suite de la description qu'aux résistances sérigraphiées. Dans chacun des modes de réalisation décrits par la suite, la résistance sérigraphiée pourra être substituée par une résistance photogravée ou par tout autre film résistif à haute densité de puissance.

La résistance sérigraphiée comporte au moins une piste formant un motif sur la deuxième paroi. La résistance comprend une piste sérigraphiée ou une pluralité de pistes définissant le motif. Ce motif peut par exemple former un serpentin, une spirale, un ensemble de cercles concentriques ou juxtaposés ou encore toutes autres formes.

Lorsque la résistance sérigraphiée est alimentée en électricité, elle produit de la chaleur qui se transmet au diffuseur 101 puis au liquide occupant la chambre de chauffage. De manière préférée la chambre de chauffage forme un canal de circulation et la chaudière objet de la présente invention est de type « Flow Through Heater » dont la définition a été donnée ci-dessus.

La résistance sérigraphiée peut par exemple présenter une puissance thermique comprise entre 1300 watts et 2500 watts, et plus particulièrement de l'ordre de 1800 à 2200 watts. Le diffuseur 101 a pour fonction de servir de substrat pour recevoir la résistance sérigraphiée et pour assurer une bonne diffusivité thermique entre la résistance sérigraphiée et le liquide. Avantageusement la première paroi 106 est revêtue d'un revêtement alimentaire. Typiquement, on choisit pour le diffuseur 101 un matériau présentant une diffusivité thermique supérieure ou égale à 10 W·m⁻¹·K⁻¹. De préférence, on réalise le diffuseur 101 en acier inoxydable ferritique ou en acier inoxydable austénitique.

Le support 100 comporte des moyens de connexion fluidique agencés pour assurer une communication fluidique entre la chambre de chauffage et un circuit fluidique d'une machine de préparation de boisson sur laquelle la chaudière est destinée à être montée. Ces moyens de connexion fluidique comportent des conduits 103, 103 d'entrée et de sortie destinés à être insérés dans des organes complémentaires de la machine. Les moyens de connexion fluidiques comportent également au moins un orifice de passage du fluide 104 pour assurer la communication de chacun des conduits 103, 103 d'entrée et de sortie avec la chambre de chauffage ou avec un canal porté par le corps 200.

Le support 100 comporte également des moyens de connexion électrique agencés pour connecter électriquement l'élément chauffant à un circuit d'alimentation électrique de la machine.

A cet effet le support 100 comporte au moins deux logements 110, 110 pour recevoir chacun un plot de contact 111 électrique formant respectivement une borne de phase et une borne de neutre. Avantageusement, le support 100 comporte également un logement 110 et un plot de contact 111 formant une borne de terre. Chaque plot de contact 111 présente une tête et une tige. La tête forme une saillie au-delà d'une paroi extérieure du support 100 de sorte à pouvoir entrer au contact d'un organe de contact porté par le circuit d'alimentation électrique de la machine. Chaque plot est conformé pour être introduit dans le logement 110 par l'extrémité de la tige. La tige comporte une surface de contact et une gorge disposée entre cette surface et la tête. La gorge est conformée pour recevoir un circlip 114 limitant la course en translation de la tige. Le support 100 comporte un ressort 112 de compression à l'intérieur duquel se loge la tige. Le ressort 112 prend appui d'une part sur une butée fixe du support 100 et d'autre part sur une collerette formée sur la tige sur son plus gros diamètre et définissant la tête du plot. Le support 100 est agencé de sorte que le ressort 112 tende à pousser la tête du plot de contact 111 hors de la chaudière. Un effort de plaquage est ainsi continuellement appliqué sur le plot afin de maintenir ce dernier au contact du circuit d'alimentation électrique malgré des vibrations, des chocs ou des dilatations thermiques que subirait la machine.

Le support 100 comporte également plusieurs lamelles 116 de contact chacune associée à un plot de contact 111 et agencée pour assurer une connexion électrique entre chacun des plots et une borne de contact de l'élément chauffant. A cet effet, le support 100 comporte un logement 115 pour chacune des lamelles 116. Chaque lamelle 116 est ainsi au contact d'une part d'un plot 111 et d'autre part de l'élément chauffant. Avantageusement, les lamelles 116 sont disposées de sorte à entrer au contact de l'élément chauffant sur une zone de pourtour du diffuseur 101 par lequel ce dernier prend appui sur une zone périphérique 122 à l'emplacement d'accueil 102 du diffuseur 101. Avantageusement cette zone périphérique 122 est disposée en périphérie de l'emplacement d'accueil 102 de sorte à ménager un espace entre l'élément chauffant et une face interne du support 100. Le support 100 comporte également au moins un thermo fusible 118 destiné à couper l'alimentation de l'élément chauffant en cas de dépassement d'une température critique correspondant au seuil de rupture du thermofusible. Le thermo fusible 118 est logé dans un logement 117 pour thermo fusible pratiqué dans le support 100. Il est destiné à être connecté directement ou par l'intermédiaire de lamelles 116 de contact à des bornes de l'élément chauffant.

Dans l'exemple illustré, le diffuseur 101 est sensiblement plan. Toutes les bornes de l'élément chauffant sont sensiblement contenues dans un même plan. L'ensemble des lamelles 116 de contact est également disposé de manière à affleurer dans un même plan.

Le corps 200 est conformé pour se positionner sur le support 100 de manière à définir avec le diffuseur 101 la chambre de chauffage.

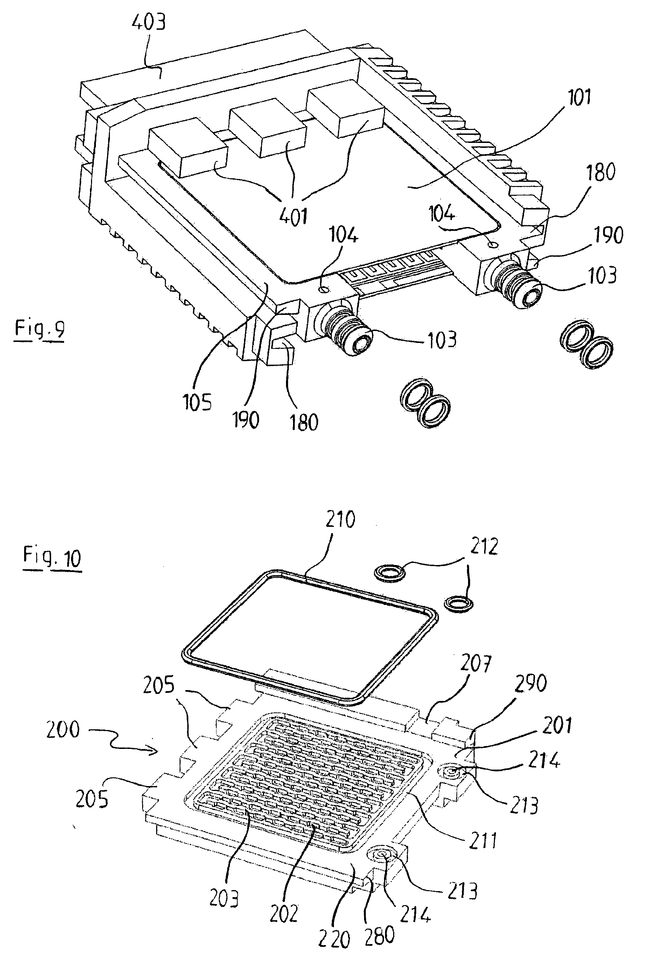

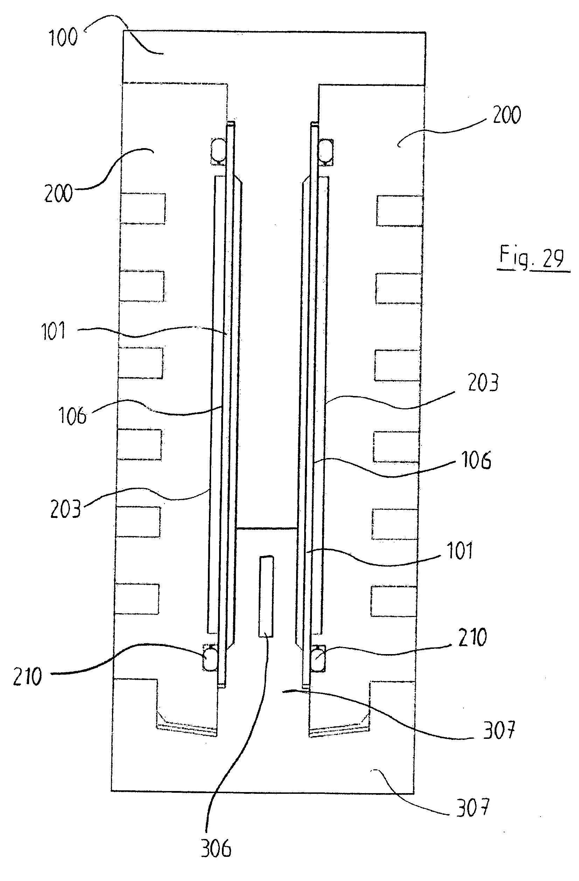

Dans l'exemple représenté, en figure 10 par exemple, le volume de chauffage définit un canal de circulation en forme de serpentin. Ce canal vu en coupe présente par exemple deux parois transversales et deux parois latérales. Une première paroi transversale est portée par la première paroi du diffuseur 101 et une deuxième paroi transversale est portée par une face 203 externe du corps 200. Les parois latérales sont portées par le corps 200 et s'étendent en direction du diffuseur 101. Sur la figure 29 le canal est coupé dans le sens de sa longueur.

Dans une variante de réalisation non illustrée, on prévoit que les parois latérales sont portées par le diffuseur 101. Dans cette variante de réalisation, le diffuseur 101 comporte plus de matière que dans la variante précédente. Les parois latérales augmentent la surface de contact entre le diffuseur 101 et le liquide. Les échanges thermiques sont donc favorisés.

Comme illustré en figure 10, la chaudière comporte un joint périphérique 210 intercalé entre le corps 200 et le diffuseur 101. Ce joint périphérique 210 entoure la chambre de chauffage de sorte à en assurer l'étanchéité. A cet effet on prévoit une rainure périphérique 211 pratiquée dans le corps 200 et à l'intérieur de laquelle se loge partiellement le joint périphérique 210. On prévoit également deux autres joints 212, 212 destinés à être intercalés entre le corps 200 et le support 100 pour assurer l'étanchéité des orifices de passage du fluide 104 portés par le support 100 et des orifices de passage complémentaires 214 portés par le corps 200 et assurant la communication fluidique jusqu'à la chambre de chauffage. Avantageusement ces joints sont toriques. Ils entourent chacun des orifices de passage 104 et sont logés dans une rainure circulaire 213 pratiquée dans une face 203 du corps 200 tournée au regard du support 100. Le support 100 présente une zone d'appui 105 en périphérie du diffuseur 101 et le corps 200 présente une zone d'appui complémentaire 220 en périphérie d'un relief 202 définissant en partie la chambre de chauffage. Le contact entre le support 100 et le corps 200 s'effectue en partie au moins par contact mutuel entre la zone d'appui 105 et la zone d'appui complémentaire 220. Un contact ferme entre ces deux zones assurent la cohésion de l'ensemble support 100/corps 200 et l'étanchéité de la chambre de chauffage.

Lorsque le fluide présent dans la chambre de chauffage est porté sous pression, des efforts sont générés par cette pression et tendent à supprimer ce contact et à écarter le corps 200 du support 100. Ces efforts de pression sont relativement importants à partir d'une pression de 6 bars. Or pour réaliser un café de type expresso l'eau doit être portée à environ 16 bars ce qui génère des contraintes particulièrement élevées entre le support 100 et le corps 200.

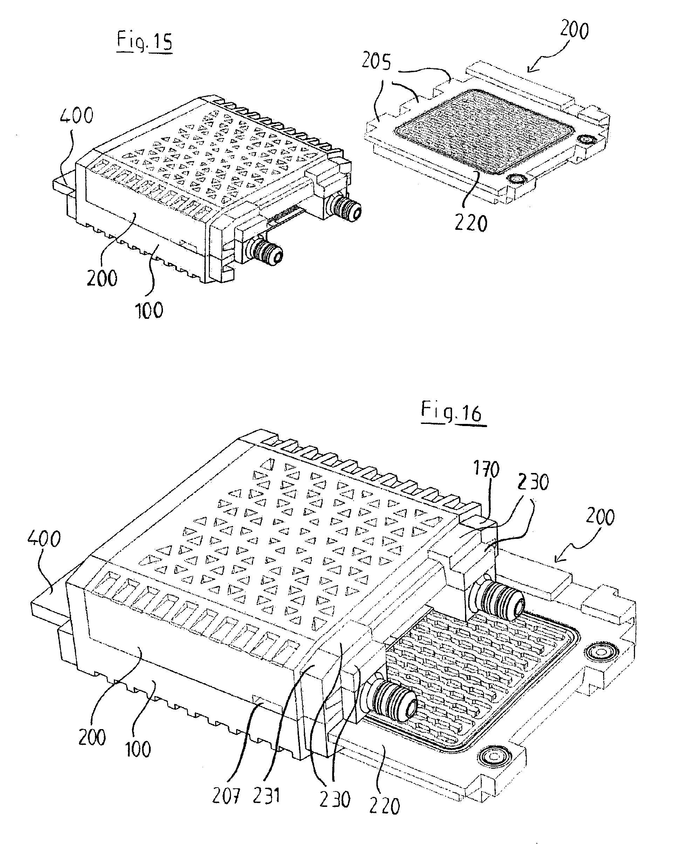

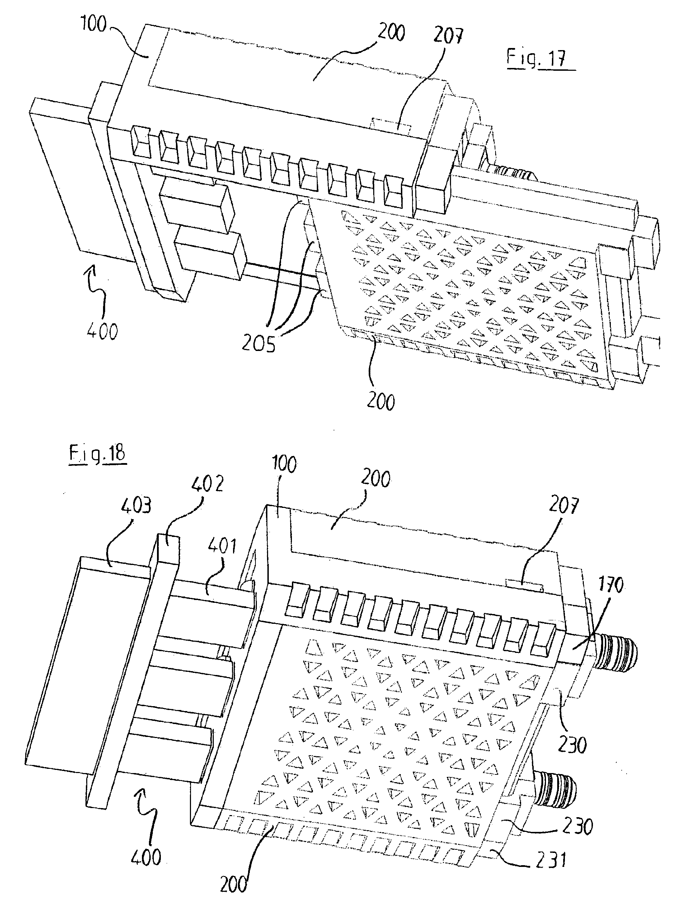

De manière caractéristique, la chaudière comporte une embase 300 agencée pour maintenir un contact ferme entre le corps 200 et le support 100 malgré d'importants efforts de pression. A cet effet, l'embase 300 est configurée de sorte à exercer sur le corps 200 une force de contact opposée à celle que l'effort de pression impose à ce dernier. L'embase 300 présente une paroi périphérique 303 agencée pour s'appliquer sur au moins une face d'appui 230 du corps 200. L'exemple illustré comporte deux faces d'appui 230 sensiblement parallèles au diffuseur 101 et / ou à la zone d'appui 105 correspondante. Des faces d'appui additionnelles 231 non parallèles au diffuseur 101 sont de préférences prévues pour augmenter la surface de contact entre l'embase 300 et le corps 200 de sorte à améliorer la transmission des efforts entre ces deux organes de la chaudière. Le support 100 comprend au moins une face d'appui correspondante 170 sur laquelle l'embase 300 prend appui pour transmettre l'effort de pression entre le support 100 et l'embase 300. Ces faces d'appui 230, 231 et 170 apparaissent clairement en figure 16 et 17.

Ainsi, l'embase 300 coopère avec le support 100 et avec le corps 200. Elle prend appui sur chacun de ces éléments.

La paroi périphérique 303 est portée par une face interne de la tête 301 de l'embase 300 qui vient se loger au moins en partie sur une portion du corps 200. Le corps 200 est ainsi partiellement au moins enserré par l'embase 300. L'embase 300 et le support 100 sont agencés de sorte que l'effort de pression exercé sur le corps 200 soit transmis à l'embase 300 qui le transmet à son tour au support 100. Ce dernier reçoit donc de l'embase 300 un effort tendant à le plaquer sur le corps 200 assurant de ce fait un contact permanent. De manière plus générale, et notamment dans le cas où le support 100 n'est pas lié au bâti de la machine, la chaudière est agencée de sorte que les efforts de pression appliqués sur le corps 200 et sur le support 100 soient tous deux transmis à l'embase 300. Cette dernière est conformée de sorte que ces efforts s'équilibrent au niveau de l'embase 300.

La structure et les matériaux de l'embase 300 sont choisis de sorte à résister à ces efforts antagonistes qui peuvent être importants.

L'embase 300 enserre le corps 200 et le support 100.

Avantageusement, la chaudière est conformée de sorte que l'embase 300 s'insère à la fois sur le corps 200 et à la fois sur le support 100, de préférence par un seul mouvement. Dans l'exemple illustré, par une translation, la tête 301 de l'embase 300 vient recouvrir en partie le corps 200 et le support 100.

Avantageusement, elle présente deux ouvertures traversantes 320 pour autoriser le passage des conduits 103, 103 d'entrée et de sortie au travers de l'embase 300 lors de l'insertion de cette dernière sur le corps 200.

L'embase 300 comporte des plots de connexion 311 agencés pour alimenter en électricité les sondes de température d'un circuit de contrôle de température. Avantageusement ces sondes sont disposées sur le diffuseur 101. A cet effet, l'embase 300 comporte trois logements 310 pour recevoir les plots de connexion. Ces plots de connexion 311 sont sensiblement similaires aux plots de contact 111 décrits précédemment pour le circuit d'alimentation électrique de l'élément chauffant. Chaque plot de connexion 311 comporte une gorge pour recevoir un circlip 316 inséré au travers d'un logement 315 prévu à cet effet. Chaque plot est agencé pour coopérer avec un ressort 312 prenant appui sur une paroi de l'embase 300 et sur une collerette formée sur le plot sur son plus gros diamètre. Ainsi chaque plot de connexion 311 est repoussé vers l'extérieur de l'embase 300 pour assurer un contact permanent entre cette dernière et le circuit de control. L'invention permet ainsi de maintenir le corps 200 au contact du support 100 de manière simple, sans faire intervenir un grand nombre de pièce. Par ailleurs elle permet de résister à des pressions élevées à l'intérieur de la chambre de chauffage. Des lamelles 314 logées dans des logements 313 pour lamelles 314 assurent une connexion électrique permanente entre les plots de connexion 311 et des bornes électriques du circuit de contrôle de température montées sur le diffuseur 101. A cet effet, il est particulièrement avantageux que l'embase 300 prolonge le support 100 de sorte à recevoir en partie le diffuseur 101. Cette configuration apparaît clairement sur la figure 29.

La chaudière comporte également des moyens de fixation amovibles de l'embase 300 sur le support 100. De préférence, ces moyens de fixation amovibles ne participent pas à l'encaissement des efforts de pression. Ils empêchent tout retrait involontaire de l'embase 300, sous l'effet de vibrations par exemple. Dans l'exemple illustré ces moyens de fixation amovibles comportent une partie mâle 305 et une partie femelle 160 portées respectivement par l'embase 300 et le support 100. La partie mâle est définie par une tige 302 s'étendant depuis la tête 301 de l'embase 300 et portant une protubérance 305. La partie femelle comporte une cavité 160 complémentaire de la partie mâle est pratiquée dans le support 100.

Avantageusement, la chaudière est agencée de sorte que les parties mâles et femelles soient mises en coopération lors de la mise en place de l'embase 300 sur le support 100 et le corps 200. Ainsi, en effectuant une seule étape d'assemblage, l'embase 300 est positionnée au contact des faces d'appui 230, 231 du corps 200, des faces d'appui correspondantes 170 du support 100 et les parties mâles et femelles sont mises en coopération. Dans l'exemple illustré, cette étape comprend une translation unique. De manière avantageuse, les parties mâles et femelles présentent des formes complémentaires qui, lorsqu'elles coopèrent ne laissent subsister qu'un seul degré de liberté. Dans l'exemple illustré, les parties mâles et femelles présentent une section rectangulaire. Lorsque la partie mâle pénètre dans la partie femelle, tous les degrés de liberté sont supprimés à l'exception d'une translation selon l'axe de la tige 302. Ainsi les moyens de solidarisation amovibles facilitent la mise en position de l'embase 300 et évitent tout mauvais positionnement ou toute modification de position en cours d'utilisation.

Les moyens de fixation comportent également au moins une clef 600. Cette clef 600 a pour fonction d'empêcher toute désolidarisation involontaire entre les parties mâles et femelles. A cet effet, la clef 600 est agencée pour supprimer les degrés de libertés subsistants entre l'embase 300 et le support 100 après leur assemblage. Dans l'exemple illustré, la clef 600 présente sensiblement une forme d'arbre ou de poutre traversant le support 100 et l'embase 300. Elle fait office de goupille pour l'embase 300 empêchant cette dernière de coulisser par rapport au support 100.

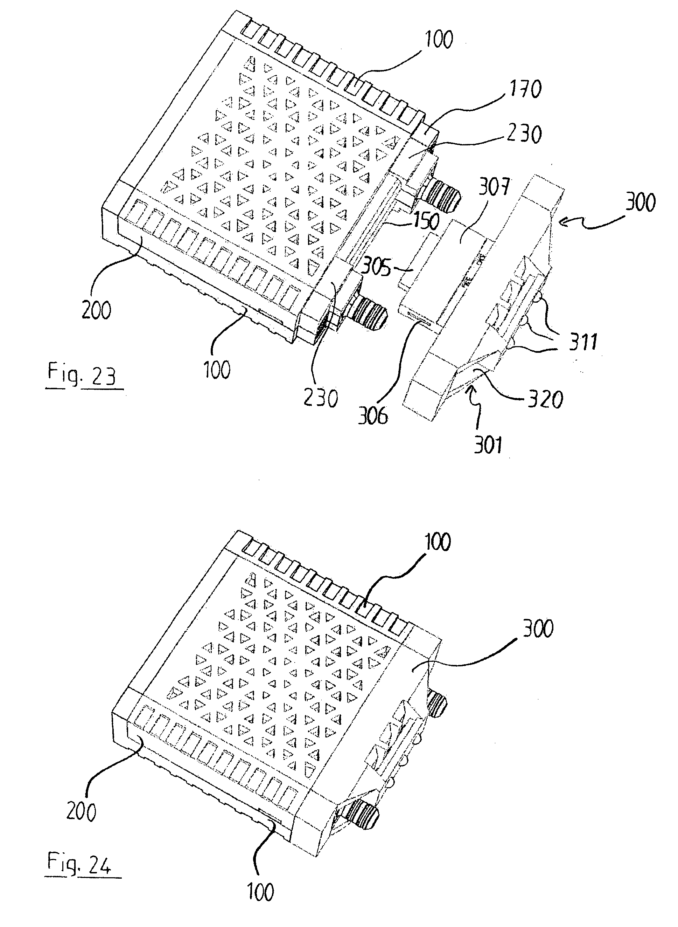

Le support 100 et l'embase 300 comportent chacun un orifice de passage 119, 306 de la clef 600. Ces orifices sont disposés au regard l'un de l'autre lorsque l'embase 300 est correctement positionnée par rapport au support 100. Cette position est de préférence atteinte automatiquement par coulissement de l'embase 300 dans le support 100 jusqu'à entrer en butée au niveau d'une augmentation de section prévue sur la tige 302 ou la tête 301. Les orifices de passages 119, 306 présentent chacun une section complémentaire de celle de la clef 600 pour faciliter l'insertion et le maintien en position de cette dernière. Les orifices 119, 306 apparaissent sur les figures 3, 23 notamment. Avantageusement, l'orifice de passage 306 porté par l'embase 300 est traversant et sensiblement symétrique selon l'axe de coulissement. Ainsi l'embase 300 peut être montée sans avoir à respecter un sens donné. Une fois la clef 600 introduite à travers le support 100 et l'embase 300, cette dernière ne peut être retirée du corps 200. Les moyens de solidarisation amovibles assurent ainsi une cohésion de la chaudière. Ils n'ont cependant pas besoin d'être dimensionnés pour encaisser un effort important puisque l'encaissement des efforts de pression et l'étanchéité sont assurés pas la coopération des différentes pièces formant la chaudière : le support 100, le corps 200 et l'embase 300. L'invention permet ainsi de se passer d'un système d'étanchéité complexe et nécessitant de nombreuses étapes de montage.

Avantageusement, l'embase 300 comporte une portion 307 destinée à prolonger le support 100. A cet effet, le support 100 comporte un évidement 150 complémentaire de cette portion de prolongement 307 et à l'intérieur duquel se loge cette dernière. Avantageusement, cet évidement 150 est situé entre les conduits 103 d'entrée et de sortie du fluide (voir figure 4 et 24 notamment). Cette portion de prolongement 307 prolonge l'emplacement d'accueil 102 dans lequel se loge le diffuseur 101. Il prolonge également la zone d'appui 105 du support 100 et reçoit une partie de la zone d'appui complémentaire 220 du corps 200. Comme indiqué précédemment, ce prolongement permet d'assurer une continuité électrique entre une sonde de température présente sur le diffuseur 101 et un circuit de contrôle de température porté par la machine. Avantageusement, cette portion de prolongement 307 porte l'orifice de passage 306 de la clef 600.

De manière préférée, le corps 200 et le support 100 présentent des portions complémentaires conformées pour coopérer de sorte à assurer leur mise en position relative. Avantageusement, la mise en prise de ces portions complémentaires assure l'imbrication du support avec le corps. A cet effet le support 100 et le corps 200 présentent des portions mâles et femelles. Par exemple le support 100 comporte au moins une ouverture 131 et le corps 200 comporte une portion saillante 205 sensiblement complémentaire à celle de l'ouverture. L'insertion de la portion mâle dans la portion femelle supprime au moins quatre degrés de liberté entre le corps 200 et le support 100. Dans l'exemple illustré, la section des portions mâles et femelles est sensiblement rectangulaire de sorte que leur coopération supprime cinq degrés de liberté. Ces portions mâles et femelles sont illustrées en figure 4 et 10. La chaudière est agencée de sorte que le degré de liberté restant soit un degré de liberté en translation selon une direction sensiblement parallèle à l'axe de l'ouverture 131 et sensiblement parallèle au plan du diffuseur 101. En outre, la paroi du support 100 portant l'ouverture 131 forme une première butée au contact de laquelle entre la base de la portion mâle pour limiter la course dans un premier sens du corps 200 par rapport au support 100 selon le degré de liberté restant.

Par ailleurs, l'embase 300 présente une paroi formant une deuxième butée pour le corps 200. Cette deuxième butée est destinée à être disposée au contact du corps 200 pour empêcher ou limiter le déplacement de ce dernier selon le degré de liberté restant dans un deuxième sens opposé au premier. Ainsi, le corps 200 se trouve enserré entre le support 100 et l'embase 300. Il ne peut se déplacer selon le degré de liberté subsistant après coopération de sa portion saillante 205 avec l'ouverture 131 du support 100.

Le corps 200 et le support 100 présentent également une paire de surfaces de guidage 180, 280 illustrée en figure 9, 10, 11 et 12. Ces surfaces 180, 280, 190, 290 forment des portions complémentaires 180, 280, 190, 290 conformées pour assurer la coopération du support 100 et du corps 200. Les figures illustrent clairement l'imbrication entre le corps 200 et le support 100 assurée par ces portions complémentaires. Ces surfaces 180, 280 sont agencées de sorte que leur coopération fasse office de butée pour le corps 200 sur le support 100 dans une direction d'amenée sensiblement perpendiculaire à la direction d'insertion des portions mâles dans les portions femelles. Ces surfaces contribuent à la stabilité de l'ensemble. Par ailleurs, et de manière particulièrement avantageuse, ces surfaces 180, 280 facilitent le positionnement du corps 200 sur le flasque 201. A cet effet la surface du guidage 180 du support 100 est positionnée de sorte que lorsque la surface de guidage 280 du corps 200 est à son contact, les portions femelles et mâles soient disposées en regard. Une simple translation à partir de cette position assure ainsi la coopération de ces portions femelles et mâles.

Avantageusement, les surfaces de guidage 180, 280 forment un ensemble rail 181-coulisseau. Cette configuration renforce la précision et la facilité du positionnement du corps 200 sur le support 100. La configuration de cette première paire de surface de guidage 180 supprime quatre degrés de liberté entre le corps 200 et le support 100. Avantageusement, la portion femelle et la portion mâle s'étendent sur sensiblement tout un premier coté du corps 200 et du support 100.

Dans l'exemple illustré, la portion mâle est portée par le corps 200 et présente une section sensiblement triangulaire ou triangulaire dont l'angle au sommet est tronqué. La portion femelle est portée par le support 100 et présente une section complémentaire. D'autres sections complémentaires peuvent bien entendu être envisagées.

Avantageusement, le corps 200 et le support 100 présentent une deuxième paire de surfaces de guidage 190, 290. Cette deuxième paire peut être le symétrique de la première paire par rapport à un plan médian de la chaudière. Avantageusement, cette deuxième paire est l'inverse de la première paire de surface de guidage 180, 280 par rapport à un plan médian. Ainsi, si la surface de guidage 180 du support 100 de la première paire est une portion femelle, alors la surface de guidage 190 du support 100 de la deuxième paire est une portion mâle.

De manière également avantageuse, la portion mâle 190 du support 100 est disposée en arrière de la zone d'appui 105. Elle ne forme donc pas saillie en avant de cette zone d'appui 105. De même, la portion mâle 280 du corps 200 est disposée en arrière de la zone d'appui complémentaire 220 et ne forme donc pas saillie sur cette dernière.

Ainsi, les cotés de la chaudière portant les portions mâles 190, 280 ne présentent aucun obstacle au-delà des zones d'appui 105, 220. Les portions femelles 180, 290 du support 100 et du corps 200 forment quant à elles saillie en avant de la zone d'appui 105 et de la zone d'appui complémentaire 220 respectivement. De cette manière, il est possible de faire coulisser le corps 200 sur le support 100 en engageant un contact au niveau de leurs zones d'appui 105 et 220 portant les portions mâles. On peut alors superposer le corps 200 sur le support 100 par un coulissement selon une direction sensiblement perpendiculaire aux axes des rails 181 définis par les premières et deuxièmes paires de surface de guidage 180, 280, 190, 290. Le coulissement est interrompu lorsque chacune des portions mâles du support 100 et du corps 200 s'engage avec la portion femelle respectivement du corps 200 et du support 100. Cette configuration renforce la tenue de la chaudière aux efforts de pression et simplifie le montage.

On notera qu'une chaudière selon l'invention peut ne présenter qu'une seule paire de portions complémentaires 131, 205 ou 180, 280 ou 190, 290. Chacune de ces paires de portions complémentaires réalise en effet un bon positionnement et l'imbrication du support 100 avec le corps 200. On peut également prévoir un nombre plus élevé de portions complémentaires que ce qui est illustré sur les figures.

Avantageusement, un espace de passage 207 est prévu dans le corps 200 pour laisser libre l'accès aux orifices 119, 306 pratiqués dans le support 100 et l'embase 300 pour insérer la clef 600. Ainsi, le corps 200 est retenu sur le support 100 par les moyens suivants :
- la coopération des portions complémentaires faisant office de surfaces de guidage 180, 280 et éventuellement 190, 290. Cette coopération facilite l'amenée du support 100 dans sa position d'assemblage. Elle autorise l'amenée du support 100 selon une direction parallèle ou perpendiculaire aux axes de coulissements des coulisseaux. Elle renforce la tenue en pression de la chaudière le long de deux premiers bords de la chaudière.
- la coopération des portions saillantes 205 du corps 200 dans les ouvertures 131 portées par le support 100. Cette coopération est assurée par coulissement du support 100 selon l'axe de coulissement des coulisseaux. Elle assure un positionnement correct du support 100 lors de la venue en butée de la base des portions saillantes 205 sur la paroi portant les ouvertures 131. Elle renforce également la tenue en pression de la chaudière, particulièrement au niveau d'un troisième bord du support 100 portant les portions saillantes 205.
- la coopération de l'embase 300 avec le support 100 et le corps 200. Cette coopération empêche tout retrait du support 100 hors de sa position de fonctionnement. Cette coopération contribue à la tenue aux efforts de pression, particulièrement au niveau d'un quatrième bord, dans la région du contact entre l'embase 300 et le support 100.

L'insertion de la clef 600 dans l'embase 300 et le support 100 empêche tout démontage de l'ensemble. La chaudière selon l'invention offre ainsi une très bonne tenue en pression. Elle présente une grande simplicité de montage et de démontage et comprend un nombre de pièces limité.

De nombreuses variantes peuvent être apportées à cette chaudière.

Notamment on peut prévoir un corps 200 en une seule partie. Cette partie peut être sensiblement plane et former un flasque 201. L'invention est particulièrement avantageuse pour ce type de corps 200 qui présente habituellement une faible résistance à la pression. Le corps 200 peut également présenter sensiblement une forme de cylindre ou de portion de cylindre. Le diffuseur 101 et le support 100 peuvent alors présenter une forme de cylindre ou de portion de cylindre.

De manière particulièrement avantageuse, le corps 200 comporte deux parties. Ces deux parties peuvent être des portions de cylindre.

Dans l'exemple illustré, le corps 200 comporte deux flasques 201, 201. Chacun des flasques 201 est associé à une chambre de chauffage. Dans cet exemple, la chaudière comporte un support 100, deux diffuseurs 101, deux chambres de chauffages, deux flasques 201 et une embase 300.

L'embase 300 enserre les deux flasques 201 au niveau de sa tête 301. La chaudière est sensiblement symétrique par rapport à un axe central. Le support 100 et l'embase 300 présentent également une symétrie par rapport à cet axe. Chaque flasque 201 est identique. La borne de terre est disposée sur cet axe. Ainsi, chacune des pièces peut être tourné vers 180° autour de cet axe sans que cela influe sur le montage ou le démontage de la chaudière. La démontabilité de la chaudière est ainsi considérablement améliorée. La symétrie de la chaudière permet également de n'imposer aucun sens d'assemblage de la chaudière sur la machine.

L'aspect symétrique de la chaudière permet également que l'ensemble des efforts de pression appliqués sur le support 100 s'équilibre mutuellement.

La chaudière selon ce mode de réalisation s'avère particulièrement avantageuse. Ainsi, elle présente un encombrement limité tout en autorisant, grâce aux deux chambres de chauffage un débit d'environ 2 à 3 cm³/s d'eau portée à 90° C. En outre elle présente une structure particulièrement robuste et résiste aisément aux efforts de pression générés par une pression de l'ordre de 16 bars voire de 30 bars.

Avec une telle chaudière comportant un corps 200 en deux parties, on peut prévoir que l'embase 300 enserre ces deux parties de sorte à les maintenir. Chacune des parties exerce sur l'embase 300 un effort opposé à celui qu'exerce l'autre partie. Les efforts s'équilibrent donc au niveau de l'embase 300. De la sorte, on peut se passer d'une transmission d'effort entre l'embase 300 et le support 100. Un simple verrouillage de l'embase 300 sur le support 100 pour éviter tout démontage involontaire est alors suffisant.

Afin de limiter les pertes énergétiques, on choisit un support et un corps dans des matériaux thermiquement isolants présentant une conductivité thermique inférieure à 0.4 W·m⁻¹·K⁻¹. On pourra les réaliser en Polysulfone renforcé par fibre de verre ou en Polyphtalamide renforcé par fibre de verre.

L'assemblage d'une chaudière selon un exemple de réalisation non limitative va maintenant être détaillé.

On insère dans chacun des logements pour plot de contact 111 un ressort 112 puis un plot de contact. Avantageusement on insère trois plots correspondant aux bornes de phase, de neutre et de terre. On rend accessible une face du support 100. Par cette face, à travers chacun des logements pour circlip 113, on dépose un circlip 114 dans la gorge prévue à cet effet sur la tige 302 du plot de contact. On dispose dans chacun des logements pour lamelles 115 une lamelle 116 de sorte que chaque lamelle 116 établisse un contact avec un plot de contact 111 et affleure au niveau de la face extérieure du support 100. On insère ainsi un thermofusible dans le logement pour thermo fusible 117 et on ajoute des lamelles 116 de contact dans le logement prévu à cet effet.

On retourne le support 100 de 180° pour rendre accessible une deuxième face du support 100. On répète les mêmes opération afin d'insérer les lamelles 116 et le thermo fusible 118 dans les logements 115, 117 prévus sur cette deuxième face.

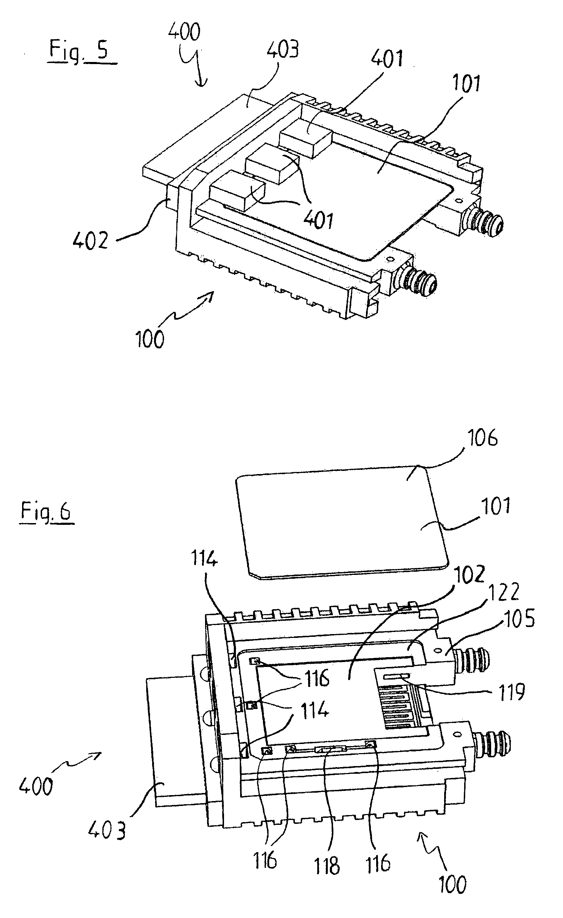

On amène un diffuseur 101 au droit de l'emplacement d'accueil de la face 203 du support 100 rendue accessible (voir figure 3). On dépose le diffuseur 101 dans l'emplacement. On amène un peigne 400 au voisinage du support 100. Le peigne 400 présente une zone de préhension 403, au moins une dent 401 et une surface de butée 402 entre la dent 401 et la zone de préhension 403. Avantageusement, le peigne 400 comporte trois dents 401, 401, 401. Les dents ont des sections complémentaires des ouvertures du support 100 (voir figure 4). On insère les dents 401 du peigne 400 dans les ouvertures. Les dents sont conformées de sorte à maintenir le diffuseur 101 dans son emplacement d'accueil. Avantageusement elles sont agencées pour plaquer le diffuseur 101 contre les lamelles 116 lorsque le peigne 400 est inséré dans le support 100. Cette insertion est stoppée par la venue en butée de la surface de butée 402 du peigne 400 contre le support 100 (voir figure 5).

On retourne le support 100 de sorte à rendre accessible son autre face 203. On répète les opérations précédentes. Ainsi un deuxième diffuseur 101 est amené au droit du logement de cette face 203. On dépose le diffuseur 101 et on insère un peigne 400 de sorte à maintenir le diffuseur 101 dans sa position de fonctionnement. Les deux peignes 400 sont insérés à partir d'un même coté du support 100.

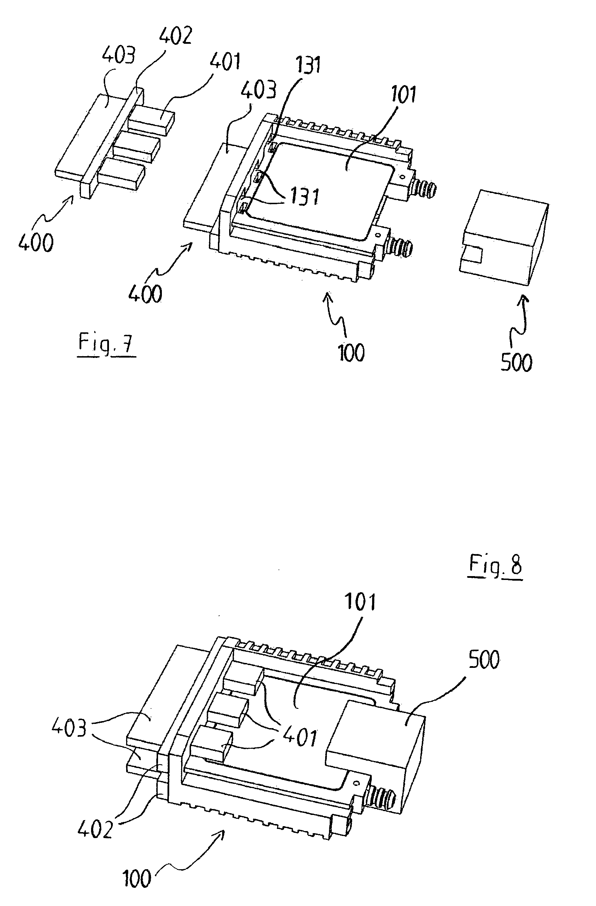

On amène une pince 500 au voisinage d'un coté du support 100 opposé à celui par lequel sont amenés les deux peignes 400, 400. La pince 500 comporte une mâchoire de préférence fixe dont les dimensions sont conformées pour enserrer les deux diffuseurs 101, 101. On positionne la pince 500 de sorte à renforcer le maintien en position de chacun des diffuseurs 101 et à plaquer ces derniers contre leurs lamelles 116 respectives. Avantageusement, la pince 500 et les peignes 400 sont agencés de sorte que chaque diffuseur 101 reçoive un effort de plaquage sensiblement uniforme. De la sorte chacun des diffuseurs 101 est disposé fermement au contact des lamelles 116 (voir figures 7 et 8). Le circuit électrique de chauffage de la chaudière est ainsi fermé.

On teste le fonctionnement du circuit de chauffage. Cette caractéristique est particulièrement avantageuse puisqu'elle permet un test électrique avant même la fin du montage de la chaudière. Ainsi, si une anomalie est détectée, il n'y a pas besoin de démonter complètement la chaudière. Ce test peut par exemple permettre de vérifier si le diffuseur 101 et les lamelles 116 sont bien présents, correctement positionnés, et en état de fonctionnement. La pince 500 et le peigne 400 permettent ainsi un test électrique préalable de la chaudière.

Une fois le fonctionnement électrique de la chaudière validé, on retire la pince 500.

On insère des joints d'étanchéité sur les conduits 103, 103 d'arrivée et de sortie de fluide (voir figure 9). On dispose le joint périphérique 210 et les joints toriques 212 dans les rainures prévues à cet effet sur la face externe du corps 200 présentant une forme de flasque 201 (voir figure 10).

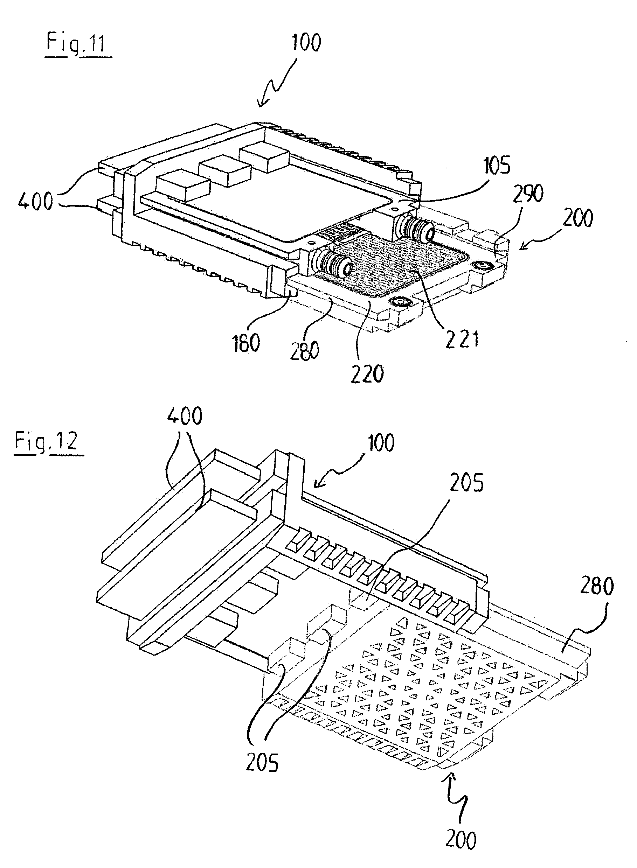

On dispose le flasque 201 sur le support 100. On met en prise les surfaces de guidage 180, 190 du support 100 avec les surfaces de guidage complémentaires 280, 290 portées par le flasque 201. Cette mise en prise peut être effectuée selon la direction de coulissement autorisée par les surfaces de guidage depuis une extrémité libre des rails 181. Avantageusement, elle est effectuée par une translation sensiblement perpendiculaire à la direction du coulissement des rails 181 de sorte à faire coopérer chaque coulisseau dans un rail 181 puis selon la direction de coulissement des rails 181 (voir figure 11 et 12). Cela permet de ne pas interférer avec un robot de préhension du support 100 qui serait nécessaire au montage et qui serait positionné par exemple entre les conduits 103, 103 d'arrivée et de sortie 103, 103.

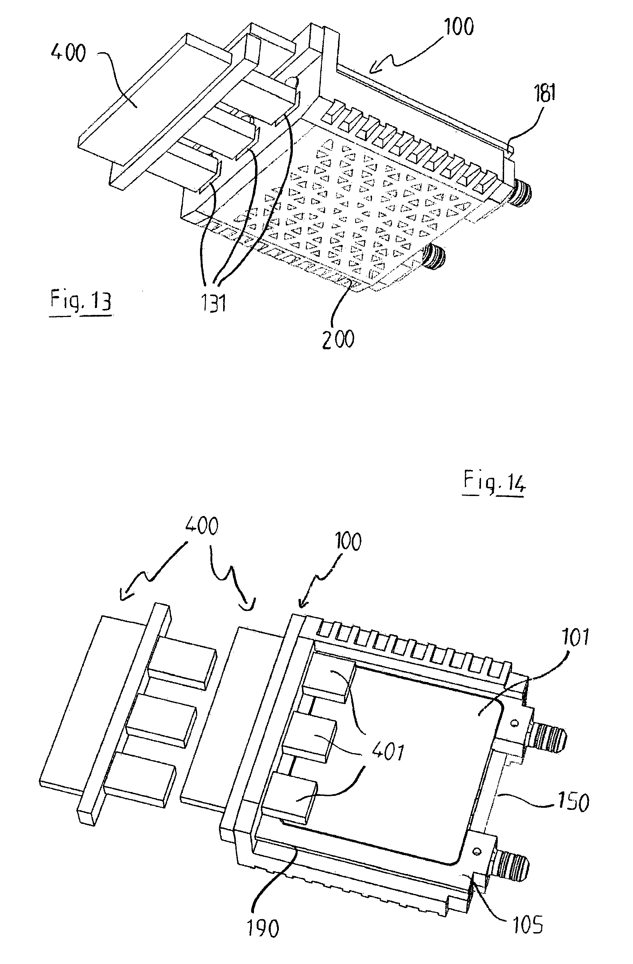

On fait coulisser le flasque 201 de sorte que ses portions saillantes 205 entrent au contact des dents du peigne 401, repousse ces dernières hors des ouvertures 131 du support 100 et se loge à son tour dans les ouvertures. Le peigne 400 est ainsi éjecté hors du support 100 (voir figure 13).

On retourne le support 100 de 180° (voir figure 14) et on amène le deuxième flasque 201 au voisinage du support 100.

On insère le deuxième flasque 201 de la même manière que le premier (voir figure 16 et 17).

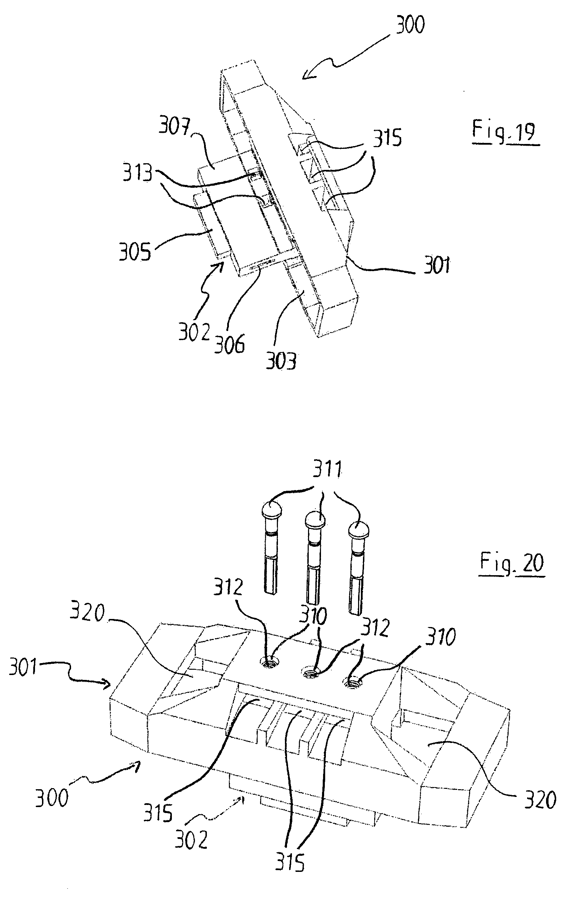

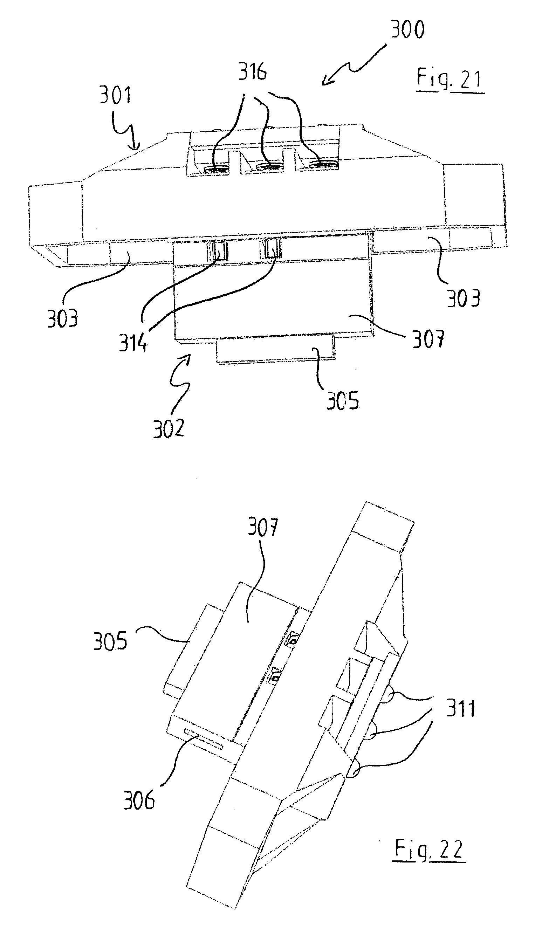

On dispose les ressorts 312 puis les plots de connexion 311 dans les logements 310 pour plots de connexion prévus sur l'embase 300 (voir figure 19 et 20). On insère les circlips 316 sur les tiges 302 des plots au travers des logements pour circlip 315. On insère les lamelles 314 dans les logements 313 pour lamelles. Au besoin, on retourne l'embase 300 pour placer chacune des lamelles 314 (voir figure 21 et 22).

On amène l'embase 300 au droit du support 100. A cet effet on dispose les ouvertures traversantes 320, 320 au regard des conduits 103, 103 d'entrée et de sortie. On insère l'embase 300 de sorte que sa tête 301 enserre les flasques 201. Ainsi, la tige 302 de l'embase 300 pénètre dans la cavité 160 du support 100. Les orifices de passage 119, 306 du support 100, de l'embase 300 et de l'espace de passage 207 du flasque 201 sont alors positionnés en regard (voir figure 23, 24).

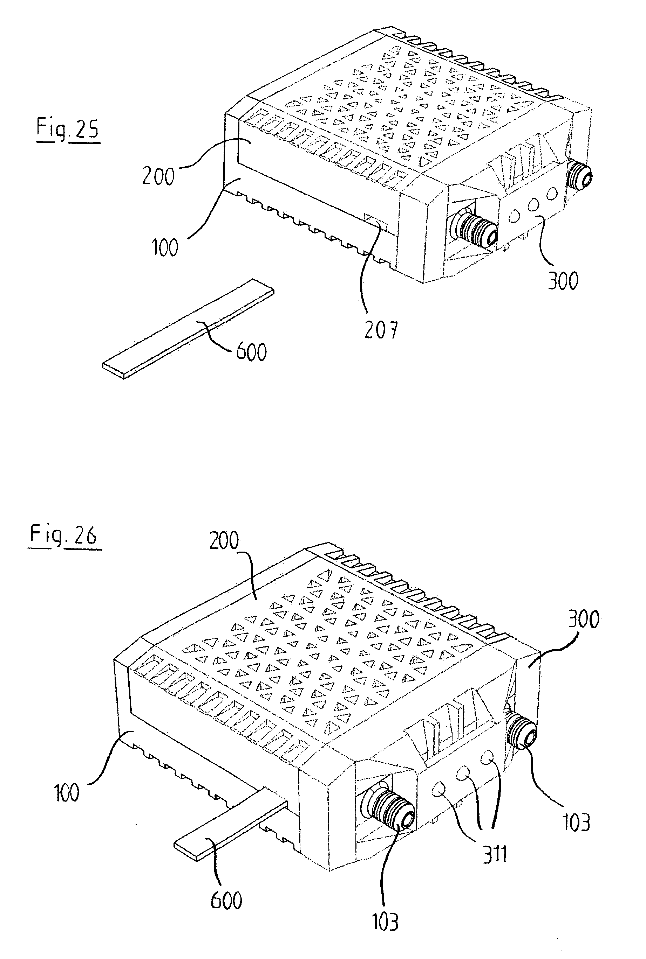

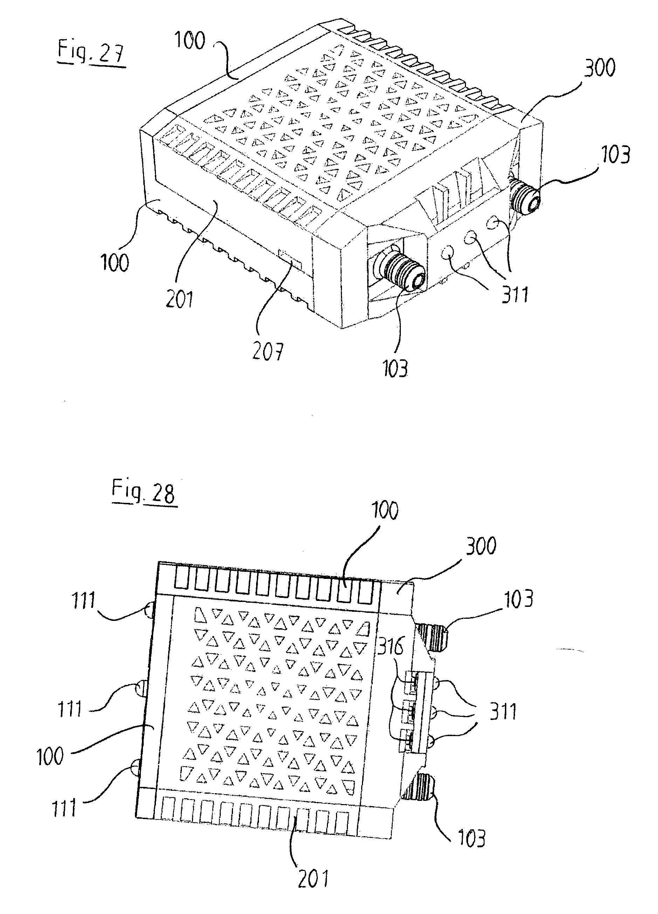

La clef 600 est insérée dans l'orifice à partir de l'espace de passage 207 du flasque 201 (voir figure 25, 26). Elle est insérée totalement jusqu'à ne plus former saillie sur les parois extérieures de la chaudière (voir figure 27 et 28).

On scelle la clef 600 de sorte que tout retrait de cette dernière romprait le scellé et indiquerait alors que la chaudière a été démontée.

Les principales étapes mentionnées précédemment sont également applicables pour une chaudière comportant un seul flasque.

Certaines étapes de montage peuvent être effectuées dans un ordre différent. Le démontage de la chaudière s'effectue en opérant les étapes en sens inverse.

L'invention permet ainsi d'obtenir une chaudière robuste de manière particulièrement simple et peu coûteuse.

L'invention n'est pas limitée aux modes de réalisation décrits mais s'étend à tout mode de réalisation conforme à son esprit.

Notamment on peut prévoir que tout ou partie des moyens de solidarisation de la chaudière à la machine, les conduits connexion fluidique et les plots de contact ne soient pas portés par le support mais par l'embase. On peut prévoir que le corps comporte le diffuseur au lieu du support.

On peut également substituer les portions mâles et portions femelles et vis versa. On peut faire varier le nombre de portions saillantes etc.

### REFERENCES

- 100.: support
- 101.: diffuseur
- 102.: emplacement d'accueil
- 103.: conduit d'entrée / sortie du fluide
- 104.: orifice de passage du fluide
- 105.: zone d'appui
- 106.: première paroi
- 110.: logement pour plot de contact et ressort
- 111.: plot de contact
- 112.: ressort
- 113.: logement pour circlip
- 114.: circlip
- 115.: logement pour lamelles
- 116.: lamelle
- 117.: logement pour thermo fusible
- 118.: thermo fusible
- 119.: orifice de passage pour la clef
- 122.: zone d'appui périphérique du diffuseur
- 131.: ouverture
- 150.: évidement
- 160.: cavité
- 170.: face d'appui correspondante
- 180.: surface de guidage
- 181.: rail
- 190.: surface de guidage

- 200.: corps
- 201.: flasque
- 202.: relief
- 203.: face
- 205.: portions saillantes
- 207.: espace de passage
- 210.: joint périphérique
- 211.: rainure périphérique

- 212.: joint torique
- 213.: rainure circulaire
- 214.: orifice complémentaire de passage du fluide
- 220.: zone d'appui complémentaire
- 230.: face d'appui
- 280.: surface de guidage
- 290.: surface de guidage

- 300.: embase
- 301.: tête
- 302.: tige
- 303.: paroi périphérique
- 305.: protubérance
- 306.: orifice de passage de la clef
- 307.: portion de prolongement
- 310.: logement pour plot de connexion
- 311.: plot de connexion
- 312.: ressort
- 313.: logement pour lamelle
- 314.: lamelle
- 315.: logement pour circlip
- 316.: circlip
- 320.: ouverture traversante

- 400.: peigne
- 401.: dent de peigne
- 402.: surface de butée
- 403.: zone de préhension

- 500.: pince

- 600.: clef

## Revendications

1. Chaudière pour machine de préparation de boissons chaudes, comprenant un corps (200), un support (100), au moins un diffuseur (101) présentant une paroi sur laquelle est disposée un élément chauffant et porté par l'un parmi le support (100) et le corps (200), le diffuseur (101) définissant avec l'autre parmi le support (100) et le corps (200) une chambre de chauffage, le support (100) et le corps (200) présentant des portions complémentaires (131, 205, 180, 280, 190, 290) conformées pour coopérer, **caractérisée en ce que** la chaudière comprend au moins une embase (300) agencée pour coopérer avec le support (100) et le corps (200) de sorte à assurer la solidarisation amovible du corps (200) sur le support (100).

2. Chaudière selon la revendication précédente dans laquelle les portions complémentaires (131, 205, 180, 280, 190, 290) sont conformées pour coopérer de sorte à supprimer au moins quatre degrés de liberté entre le support (100) et le corps (200).

3. Chaudière selon l'une quelconque des revendications précédentes comprenant une clef (600) destinée à être insérée dans le support (100) et l'embase (300) pour assurer la solidarisation amovible de cette dernière sur le support (100).

4. Chaudière selon la revendication précédente comportant un scellé associé à la clef (600) et conformé pour être supprimé en cas de retrait de la clef (600).

5. Chaudière selon l'une quelconque des revendications précédentes dans laquelle la chambre de chauffage est sensiblement contenue dans un plan.

6. Chaudière selon la revendication précédente dans laquelle le corps (200) comprend deux flasques (201, 201) disposés de part et d'autre du support (100).

7. Chaudière selon l'une quelconque des revendications 1 à 4 dans laquelle la chambre de chauffage présente sensiblement une forme de cylindre ou de portion de cylindre.

8. Machine de préparation de boissons chaudes comportant une chaudière selon l'une quelconque des revendications précédentes.

9. Procédé d'assemblage d'une chaudière selon l'une quelconque des revendications 1 à 7 dans lequel on opère au moins une translation relative entre le corps (200) et le support (100) pour les faire coopérer, on fixe l'embase (300) sur le corps (200) et on solidarise l'embase (300) sur le support (100).

10. Procédé selon la revendication précédente dans lequel on insère une clef (600) dans le support (100) et l'embase (300) pour assurer la solidarisation amovible de cette dernière sur le support (100) et on scelle la clef (600).

11. Procédé selon l'une quelconque des revendications précédentes dans lequel, de manière préalable à la coopération du corps (200) sur le support (100), on dispose sur le support (100) un diffuseur (101) associé à un élément chauffant, on insère au moins une dent (401) d'un peigne (400) au travers d'au moins une ouverture (131) portée par le support (100) de sorte à assurer le maintien du diffuseur (101) sur le support (100).

12. Procédé selon la revendication précédente dans lequel on retourne le support (100), on dispose sur le support (100) un deuxième diffuseur (101) associé à un élément chauffant, on insère au moins une dent (401) d'un deuxième peigne (400) au travers d'au moins une deuxième ouverture (131) portée par le support (100) de sorte à assurer le maintien du deuxième diffuseur (101) sur le support (100).

13. Procédé selon l'une quelconque des deux revendications précédentes dans lequel lorsqu'on dispose le diffuseur (101) sur le support (100) on connecte électriquement l'élément chauffant avec au moins un organe d'alimentation électrique porté par le support (100) et on effectue un test électrique sur l'ensemble formé par le support (100) et le diffuseur (101).

14. Procédé selon l'une quelconque des trois revendications précédentes dans lequel le corps (200) chasse le peigne (400) hors du support (100) lors de la translation relative du corps (200) par rapport au support (100).

## Patentansprüche

1. Heißwasserbereiter für eine Getränkezubereitungsmaschine mit einem Körper (200), einem Halter (100) und mindestens einem Diffusor (101), der eine Wand besitzt, an der ein Heizelement angeordnet ist und die von einem der Elemente Halter (100) oder Körper (200) getragen wird, wobei der Diffusor (101) mit dem jeweils anderen Element, Halter (100) oder Körper (200), eine Heizkammer bildet, wobei der Halter (100) und der Körper (200) einander ergänzende Abschnitte (131, 205, 180, 280, 190, 290) bilden, die so gestaltet sind, dass sie miteinander zusammenwirken, **gekennzeichnet dadurch, dass** der Heißwasserbereiter mindestens einen, zum Zusammenwirken mit dem Halter (100) und dem Körper (200) gestalteten Sockel (300) besitzt, so dass die lösbare Verbindung des Körpers (200) auf dem Halter (100) gewährleistet ist.

2. Heißwasserbereiter gemäß vorstehendem Patentanspruch, bei dem die einander ergänzenden Abschnitte (131, 205, 180, 280, 190, 290) so gestaltet sind, dass sie derart miteinander zusammenwirken, dass mindestens vier Freiheitsgrade zwischen dem Halter (100) und dem Körper (200) aufgehoben werden.

3. Heißwasserbereiter gemäß einem der vorstehenden Patentansprüche, mit einem Schlüssel (600), der dazu bestimmt ist, in den Halter (100) und den Sockel (300) eingeführt zu werden, um die lösbare Verbindung des letzteren im Halter (100) sicherzustellen.

4. Heißwasserbereiter gemäß vorstehendem Patentanspruch mit einem dem Schlüssel (600) zugeordneten Sicherungselement, das so ausgebildet ist, dass es beim Herausziehen des Schlüssels (600) beseitigt wird.

5. Heißwasserbereiter gemäß einem der vorstehenden Patentansprüche, bei dem die Heizkammer annähernd in einer Ebene liegt.

6. Heißwasserbereiter gemäß vorstehendem Patentanspruch, bei dem der Körper (200) zwei, auf beiden Seiten des Halters (100) angeordnete Flansche (201, 201) besitzt.

7. Heißwasserbereiter gemäß einem der Patentansprüche 1 bis 4, bei dem die Heizkammer annähernd zylindrisch ist, oder einen Teil eines Zylinders darstellt.

8. Zubereitungsmaschine für heiße Getränke mit einem Heißwasserbereiter gemäß einem der vorstehenden Patentansprüche.

9. Verfahren zum Zusammenbau eines Heißwasserbereiters gemäß einem der Patentansprüche 1 bis 7, bei dem für ihr Zusammenwirken mindestens eine Translationsbewegung zwischen dem Körper (200) und dem Halter (100) ausgeführt wird, der Sockel (300) am Körper (200) befestigt und der Sockel (300) mit dem Halter (100) verbunden wird.

10. Verfahren gemäß einem der vorstehenden Patentansprüche, bei dem ein Schlüssel (600) in den Halter (100) und den Sockel (300) eingeführt wird, um die lösbare Verbindung des letzteren im Halter (100) sicherzustellen und bei dem der Schlüssel (600) gesichert wird.

11. Verfahren gemäß einem der vorstehenden Patentansprüche, bei dem vor dem Zusammenwirken des Körpers (200) mit dem Halter (100) ein einem Heizelement zugeordneter Diffusor (101) auf den Halter (100) aufgesetzt wird und mindestens ein Zahn (401) eines Kamms (400) durch mindestens eine Öffnung (131) des Halters (100) eingeführt wird, so dass der feste Sitz des Diffusors (101) im Halter (100) gewährleistet ist.

12. Verfahren gemäß vorstehendem Patentanspruch, bei dem der Halter (100) umgedreht wird, bei dem auf dem Halter (100) ein zweiter, einem Heizelement zugeordneter Diffusor (101) aufgesetzt wird, bei dem mindestens ein Zahn (401) eines zweiten Kamms (400) durch mindestens eine zweite Öffnung (131) im Halter (100) geführt wird, so dass der feste Sitz des zweiten Diffusors (101) im Halter (100) gewährleistet ist.

13. Verfahren gemäß einem der vorstehenden Patentansprüche, bei dem ein Diffusor (101) auf den Halter aufgesetzt und das Heizelement mit mindestens einem, auf dem Halter (100) installierten Organ zur elektrischen Stromversorgung elektrisch verbunden wird und bei dem an der von Halter (100) und Diffusor (101) gebildeten Baugruppe ein elektrischer Test ausgeführt wird.

14. Verfahren gemäß einem der drei vorstehenden Patentansprüche, bei dem der Körper (200) den Kamm (400) während der relativen Translationsbewegung zwischen Körper (200) und Halter (100) aus dem Halter (100) ausstößt.

## Claims

1. Boiler for a machine for making hot drinks, comprising a body (200), a support (100), at least one diffuser (101) having a wall on which is arranged a heating element carried by one of either the support (100) and the body (200), the diffuser (101) defining a heating chamber with the support (100) and the body (200), the support (100) and the body (200) having complimentary portions (131, 205, 180, 280, 190, 290) shaped so as to co-act, **characterised in that** the boiler comprises at least one base (300) arranged to co-act with the support (100) and the body (200) to ensure the detachable securing of the body (200) on the support (100).

2. Boiler according to the preceding claim wherein the complementary portions (131, 205, 180, 280, 190, 290) are shaped to co-act so as to eliminate at least four degrees of freedom between the support (100) and the body (200).

3. Boiler according to any preceding claim comprising a key (600) for inserting into the support (100) and the base (300) so as to ensure the detachable securing of the latter on the support (100).

4. Boiler according to the preceding claim comprising a seal associated with the key (600) shaped so as to be eliminated when the key (600) is withdrawn.

5. Boiler according to any of the preceding claims wherein the heating chamber is substantially contained in a plane.

6. Boiler according to the preceding claim wherein the body (200) has two flanges (201, 201) arranged on either side of the support (100).

7. Boiler according to any one of claims 1 to 4 wherein the heating chamber has substantially the shape of a cylinder or portion of cylinder.

8. A machine for preparing hot beverages comprising a boiler according to any of the preceding claims.

9. A method for assembling a boiler according to any one of claims 1 to 7 wherein at least one relative translation takes place between the body (200) and the support (100) so that they co-act; the base (300) is fixed on body (200) and the base (300) is joined to the support (100).

10. Method according to the preceding claim wherein a key (600) is inserted into the support (100) and the base (300) for the detachable securing of the latter to the support (100) and the key (600) is sealed.

11. Method according to any preceding claim wherein, prior to the body (200) co-acting on the support (100), a diffuser (101) associated with a heating element is arranged on the support (100), at least one tooth (401) of a comb (400) is inserted through at least one opening (131) on the support (100) so as to ensure that the diffuser (101) is held on the support (100).

12. Method according to the preceding claim wherein the support (100) is turned, a second diffuser (101) associated with a heating element is placed on the support (100), at least one tooth (401) of a second comb (400) is inserted through at least a second opening (131) carried on the support (100) so as to ensure that the second diffuser (101) is held on the support (100).

13. A method according to any one of the preceding claims wherein the diffuser (101) is placed on the support (100) so as to electrically connect the heating element with at least one electrical feed carried on the support (100) and an electric test is carried out on the assembly formed by the support (100) and the diffuser (101).

14. A method according to any one of the three preceding claims wherein the body (200) forces the comb (400) out of the support (100) when translation of the body (200) relative to the support (100) takes place.
